# EUROPÄISCHE PATENTSCHRIFT

(11) **EP 1 050 862 B1**
(45) Veröffentlichungstag und Bekanntmachung des Hinweises auf die Patenterteilung: **04.03.2009**
(21) Anmeldenummer: 00109461.4
(22) Anmeldetag: 03.05.2000
(51) Int. Cl.: H04W 4/02

(54) **Verfahren und Vorrichtung zur Übertragung von Informationen an eine Person**
Method and device for transmitting information to a person
Procédé et dispositif pour la transmission d'information à une personne

(30) Priorität: 03.05.1999 DE 19920223
(43) Veröffentlichungstag der Anmeldung: 08.11.2000
(60) Teilanmeldung: 07006723.6
(73) Patentinhaber: Fraunhofer-Gesellschaft zur Förderung der angewandten Forschung e.V., 80686 München (DE)
(72) Erfinder: Hupp, Jürgen, Dipl.-Ing., 90425 Nürnberg (DE); Rebhan, Klaus, Dipl.-Ing., 91052 Erlangen (DE); Striemer, Rüdiger, Dr.-Ing., 44787 Bochum (DE); Lindert, Frank, Dipl.-Inf., 48703 Stadtlohn (DE); Kemmerling, Martin, Dipl.-Ing., 58300 Wetter (Ruhr) (DE)
(74) Vertreter: Schoppe, Fritz

(56) Entgegenhaltungen:
- EP-A- 0 756 153
- EP-A- 0 863 641
- DE-A- 4 442 413
- DE-A- 19 837 568
- US-A- 5 539 395
- PATENT ABSTRACTS OF JAPAN vol. 1999, no. 14, 22. Dezember 1999 (1999-12-22) & JP 11 250393 A (NTT DATA CORP), 17. September 1999 (1999-09-17)
- PATENT ABSTRACTS OF JAPAN vol. 2000, no. 01, 31. Januar 2000 (2000-01-31) & JP 11 282863 A (SEIKO EPSON CORP), 15. Oktober 1999 (1999-10-15)

## Beschreibung

Die vorliegende Erfindung bezieht sich auf ein Verfahren und eine Vorrichtung zur Übertragung von Informationen, und insbesondere auf ein Verfahren und eine Vorrichtung zum schnellen und effektiven Übertragen von Informationen, beispielsweise von Nachrichten oder Notrufen, an eine Person.

Durch die in den letzten Jahren stark vorangetriebene Mikroelektronik- und Telekommunikationsentwicklung stehen einer Person im Alltag viele Informationsverarbeitungs- und Kommunikationssendegeräte zur Verfügung, so daß die Person, z. B. ein Angestellter, meist mehrere Möglichkeiten hat, wie er Informationen empfangen kann. Heutzutage ist es beispielsweise nicht selten, daß ein Geschäftsmann ein Handy mit SMS (SMS = Short Messaging Service = Kurznachrichtendienst), ein Telefon, ein Fax, ein Notebook-Computer mit einem Modem und ein Notepad zur Auswahl hat, um Information zu empfangen.

Mit dem Entwicklungsfortschritt in der Mikroelektronik stieg ferner die Anzahl an Übertragungsmöglichkeiten und Bereitstellungsmöglichkeiten für die Informationen. Neben der Übertragung von Informationen durch ein Telefonnetz, stehen heutzutage auch zunehmends drahtlose Übertragungen wie z. B. eine Funkübertragung oder eine Infrarotübertragung zur Verfügung. Es sind zusätzlich eine Vielzahl von Bereitstellungsformen vorhanden, wie z. B. E-mails, Sprachausgabe, SMS usw. Aus diesem Grund existieren viele Umwandlungseinrichtungen, die beispielsweise eine E-mail-Nachricht in eine SMS-Nachricht umwandeln können, wobei solche Umwandlungen hardwaremäßig oder softwaremäßig implementiert sein können. Da es im Sinne eines Herstellers eines bestimmten Endgeräts ist, daß dessen Produkt mit möglichst allen anderen Kommunikationsgeräten kompatibel ist, sind viele solche Umwandlungsvorrichtungen vorhanden.

Gerade wegen der zunehmenden Anzahl an Endgeräten, über die Informationen an eine Person übermittelt werden können, ist es für den Absender jedoch zunehmend schwieriger geworden, das geeignete Endgerät auszuwählen. Aufgrund dessen kann es beispielsweise passieren, daß Informationen zu einem Endgerät gesendet werden, beispielsweise einem Computer mit einem Modemanschluß, obwohl die Person, an die die Nachricht gesendet werden soll, das Endgerät längere Zeit nicht verwendet. Ein Absender hätte beispielsweise die Nachricht als SMS-Nachricht zu dem Handy des Empfängers senden können, anstatt eine E-mail zu dem Rechner zu schicken.

Auf diese Weise können gerade im geschäftlichen Bereich enorme Verluste dadurch entstehen, daß wichtige und dringende Informationen, beispielsweise Börsenkurse, die Empfangsperson zu spät erreichen. Aber auch im Bereich von Notdiensten, wie z. B. Krankenhäusern, kann es verheerende Auswirkungen haben, wenn ein Alarm an eine Person geschickt wird, die vom Unfallort weit entfernt ist, obwohl sich vielleicht eine andere Person näher am Unfallort befindet.

Die US 5,539,395 A bezieht sich auf ein Gerät und ein Verfahren zum positionsabhängigen Informationsempfang und beschreibt insbesondere ein tragbares Gerät, mit dem es einem Benutzer ermöglicht wird, aus der Vielzahl von Informationen, die von einem Rufsystem über ein Gesamtgebiet ausgestrahlt werden, nur mit denjenigen Informationen versorgt zu werden, die sich entweder auf die Zelle beziehen, in der sich das mobile Gerät befindet, und/oder an das mobile Gerät bzw. den Benutzer desselben gerichtet sind. Die Positionsbestimmung erfolgt über einen Positionsempfänger an dem mobilen Gerät selbst.

Die DE 44 42 413 A1 beschreibt ein Verfahren zur Einstellung eines mobilen Rundfunkempfängers auf einen Rundfunksender. Insbesondere bezieht sich das Dokument auf die positionsabhängige Auswahl von Rundfunksendern aus einer am jeweiligen Ort des Empfängers empfangbaren Mehrzahl von Rundfunksendern, um eine automatische Auswahl zu ermöglichen und somit beispielsweise die onzentration eines Autofahrers auf den Verkehr nicht zu stören. Um die Sendeauswahl treffen zu können, umfaßt der Rundfunkempfänger eine Einrichtung zur Positionsbestimmung und einen Mikrocomputer, der basierend auf einer bestimmten Position auf eine Liste zugreift, in der bestimmten Gebieten eine Auswahl von für das jeweilige Gebiet interessanten Sendern bzw. Programm-IDs zugeordnet sind. Folglich bezieht sich das Dokument ebenfalls nicht auf eine positionsabhängige Übertragung von Informationen, sondern vielmehr auf eine positionsabhängige Auswahl von positionsunabhängig übertragenen Informationen.

Der Aufgabe der vorliegenden Erfindung besteht folglich darin, ein Verfahren und eine Vorrichtung zum Übertragen von Informationen an eine Person zu schaffen, das eine schnelle und effektive Übertragung von Informationen ermöglicht.

Diese Aufgabe wird durch ein Verfahren gemäß Anspruch 1 und eine Vorrichtung gemäß Anspruch 5 gelöst.

Bevorzugte Weiterbildungen sind in der Unteransprüchen definiert.

Bevorzugte Ausführungsbeispiele der vorliegenden Erfindung werden nachfolgend bezugnehmend auf die beiliegenden Zeichnungen näher erläutert. Es zeigen:
- Fig. 1: ein erstes Ausführungsbeispiel der vorliegenden Erfindung, bei dem eine Person anwesend ist, an die Informationen gesendet werden sollen; und
- Fig. 2: ein zweites Ausführungsbeispiel der vorliegenden Erfindung bei dem vier Personen anwesend sind, an die Informationen gesendet werden können.

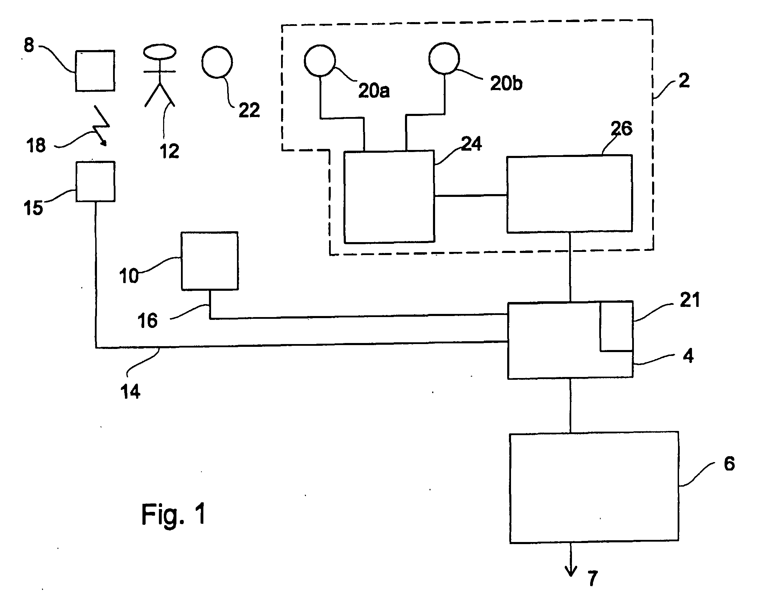

Anhand der Fig.1 wird nachfolgend ein erstes Ausführungsbeispiel des erfindungsgemäßen Verfahrens und der erfindungsgemäßen Vorrichtung näher beschrieben.

Die in Fig. 1 gezeigte Vorrichtung zum Übertragen von Informationen umfaßt eine Positionserfassungseinrichtung 2, eine Signalverarbeitungseinrichtung 4, eine Informationsempfangseinrichtung 6 und mehrere Endgeräte 8, 10, die einer Person 12 zugeordnet sind.

Die Informationsempfangseinrichtung 6 empfängt Informationen, die an die Person 12 weiterzuleiten sind, und ist beispielsweise mit einer Mehrzahl von Telekomunikationseinrichtungen, beispielsweise einem Telefonnetz und einer Rundfunkstation, verbunden, wie es durch den Pfeil 7 angedeutet ist. Die Informationsempfangseinrichtung 6 überträgt die Information an die Signalverarbeitungseinrichtung 4, wobei gemäß einem weiteren Ausführungsbeispiel die empfangenen Informationen in ein internes Format umgewandelt werden, das eine Verarbeitung der empfangenen Informationen durch die Signalverarbeitungseinrichtung 4 ermöglicht. Die Signalverarbeitungseinrichtung 4 ist ferner mit der Positionserfassungseinrichtung 2 verbunden, die Signale an die Signalverarbeitungseinrichtung 4 sendet, die einen Aufenthaltsort der Person 12 wiedergeben, an die die Informationen übertragen werden sollen. Die Signalverarbeitungseinrichtung 4 überträgt Informationen an die Endgeräte 8, 10.

Das Endgerät 10 aus Fig. 1 ist ein stationäres Endgerät, wie z. B. ein Computer, das über eine Datenleitung 16, wie z. B. ein lokales Netz (LAN = Local Area Network), mit der Signalverarbeitungseinrichtung 4 verbunden ist. Das Endgerät 8 ist ein mobiles Endgerät, wie z. B. ein Handy oder ein PDA (PDA = Personal Digital Assistant = Persönliche Digitale Unterstützung), wobei die Informationen von der Signalverarbeitungseinrichtung 4 über ein Telekommunikationskabel 14 und eine Funkübertragungseinrichtung 15 in Form eines elektromagnetischen Signals 18 an das mobile Endgerät 8 übertragen werden. Ein weiteres mobiles Endgerät kann zum Beispiel ein Notebookcomputer sein, der über eine Infrarotschnittstelle verfügt, wobei in diesem Fall die Funkübertragungseinrichtung 15 ein Infrarotsender und das elektromagnetische Signal 18 ein Infrarotsignal ist. Ein weiteres stationäres Endgerät 10 ist zum Beispiel ein Lautsprecher, der die Informationen akustisch wiedergibt. Beispiele für weitere Endgeräte sind ein Fax-Gerät, ein Notepad oder ein Telefon. Jedes der Geräte verfügt zudem über Funktionen zum Alarmieren, daß Informationen empfangen werden, wie z. B. ein Klingelton, ein Piepston, eine Signallampe oder eine Schwingungseinrichtung, um die Person über das Eintreffen der Informationen zu informieren.

Jedes der Endgeräte 8, 10 verfügt über eine oder mehrere Ausgabeformen bzw. Anzeigefunktionen, über die die Informationen wiedergegeben werden können. Aus diesem Grund umfaßt die Signalverarbeitungseinrichtung 4 eine Umwandlungseinrichtung 21, die die empfangenen Informationen in eine geeignete Ausgabeform umwandelt. Sollen beispielsweise Informationen zu einem Lautsprecher übertragen werden, so wandelt die Umwandlungseinrichtung die Informationen in eine akustische Sprachnachricht um. Vorrichtungen, die eine Umwandlung von schriftlichen Daten, beispielsweise eine Email, in mündliche Daten (Sprachausgabe) umwandeln können, sind im Stand der Technik bereits bekannt. Es kann ferner vorgesehen sein, daß die Signalverarbeitungsvorrichtung 4 Zusatzinformationen zu dem Endgerät 8, 10 überträgt, die von dem jeweiligen Endgerät 8, 10 abhängen und die Art und Weise steuern wie die Informationen der Person 12 gemeldet werden, wie z. B. durch ein Klingelton oder eine Signallampe.

Bei dem in Fig. 1 gezeigten Ausführungsbeispiel umfaßt das Positionserfassungssystem 2 mehrere Sende/Empfangs-Einrichtungen 20a, 20b, die beispielsweise in einem Haus an verschiedenen vorbestimmten Orten, beispielsweise in verschiedenen Zimmern, angebracht sind. Mittels dieser Sende/Empfangs-Einrichtungen 20a, 20b kann die Anwesenheit eines Transponders 22 in der Nähe des vorbestimmten Orts einer Sende/Empfangs-Einrichtung 20a erfaßt werden. Der Transponder 22 weist eine Kennung auf, die der Person 12 eindeutig zugeordnet ist, und wird von der Person 12 mitgeführt. Der Transponder kann beispielsweise an einem Namensschild, das bei vielen Unternehmen üblich ist und das die Person 12 trägt, angebracht sein. Jede Sende/Empfangs-Einrichtung 20a, 20b ist mit einer Zentraleinheit 24 verbunden, um der Zentraleinheit 24 zu melden, falls sich der Transponder 22 bzw. die Person 12 in der Nähe der jeweiligen Sende/Empfangs-Einrichtung befindet. In Fig. 1 befindet sich der Transponder 22 beispielsweise in der Nähe der Sende/Empfangs-Einrichtung 20a, so daß die Zentraleinheit 24 ein Signal von der Sende/Empfangs-Einrichtung 20a erhält. Bei diesem Ausführungsbeispiel wird folglich die Position bzw. der Aufenthaltsort der Person 12 abschnittsweise (in Einheiten der Umgebungen um die Sender/Empfangs-Einrichtungen 20a, 20b) bestimmt, wobei diese abschnittsweise Aufenthaltsbestimmung beispielsweise unterschiedlichen Aufenthaltsräumen entsprechen kann, wie z. B. einer Küche, einem Besprechungsraum, einem Büro, einem Sekretariat oder einem Flurabschnitt.

Es wird darauf hingewiesen, daß andere Implementierungsmöglichkeiten möglich sind, um den Aufenthaltsort der Person 12 zu bestimmen. Es können beispielsweise eine Mehrzahl von Infrarotsensoren an unterschiedlichen vorbestimmten Orten angebracht sein, die bestimmen, ob sich eine Person in ihrer Umgebung aufhält. Jeder Infrarotsensor würde, wie die Sende/Empfangs-Einrichtungen 20a, 20b bei dem bevorzugten Ausführungsbeispiel, mit der Zentraleinheit 24 verbunden sein, um zu derselben ein Signal zu senden, solange sich eine Person in ihrer Umgebung befindet. In ähnlicher Weise kann die Position auch mittels Ultraschall-Sende/Empfangseinrichtungen bestimmt werden, wobei der Aufenthaltsort einer Person ortsgenau gemessen werden kann.

Es ist ferner möglich, daß die Person 12 über ein GPS-System verfügt, wobei ein Sender, der in dem GPS-System integriert ist, die physische Position bzw. den Aufenthaltsort, beispielsweise zusammen mit einer Kennung, die der Person 12 zugeordnet ist, zu der Zentraleinheit 24 sendet. In diesem Fall wird der Aufenthaltsort der Person ortsgenauer bestimmt als bei dem bevorzugten Ausführungsbeispiel, was besonders bei großen Raumflächen, wie z. B. bei dem Einsatz in Lagerhallen, vorteilhaft sein kann. Ferner kann anstatt des Transponders 22 des bevorzugten Ausführungsbeispiels beispielsweise ein Funktag oder ein infrarotbasiertes System eingesetzt werden, um mittels verteilt angebrachter Sensoreinrichtungen die Kennung und den Standort der Person zu bestimmen.

Es ist ebenfalls möglich ein von der Person 12 mitgeführtes mobiles Endgerät 8 zu verwenden, um den momentanen Aufenthaltsort der Person 12 in einer Funkzelle zu bestimmen. Auf diese Weise könnte die Anzahl der verwendeten Geräte verringert werden, falls das Endgerät zudem eine eindeutige Kennung aufweist, die der Person 12, die das Gerät mitführt, zugeordnet werden kann.

Die Zentraleinheit 24 sendet den Aufenthaltsort der Person 12 zusammen mit der Kennung des Transponders 22 bzw. der Person 12 zu einer Personeninformationseinrichtung 26, über die die Positionserfassungseinrichtung 2 direkt mit der Signalverarbeitungseinrichtung 4 verbunden ist.

Die Personeninformationseinrichtung 26 wandelt auf der Basis einer logischen Raumaufteilung den bestimmten physischen Aufenthaltsort der Person 12 in einen kodierten logischen Aufenthaltsort um. Die Ausgangssignale der Personeninformationseinrichtung 26, die dem Aufenthaltsort auf der Basis einer logischen Raumaufteilung entsprechen und die an die Signalverarbeitungseinrichtung 4 gesendet werden, geben beispielsweise wieder, daß sich "Herr Müller in dem Besprechungszimmer II" befindet. Den Räumen der Raumaufteilung sind ferner aufenthaltsortbezogene Situationen zugeordnet. Dementsprechend wird angenommen, daß sich eine Person, die sich in einem Besprechungszimmer befindet, in einer Besprechung sitzt usw. Die Personeninformationseinrichtung 26 kann ferner auf gespeicherte Daten zurückgreifen, die die Endgeräte 8, 10 umfassen, die der Person 12 zur Verfügung stehen und über die Informationen an die Person 12 übertragen werden können. Der Aufenthaltsort der Person 12 auf der Basis der logischen Raumaufteilung und eine Liste der der Person 12 zur Verfügung stehenden Endgeräte 8, 10 werden zu der Signalverarbeitungseinrichtung 4 gesendet.

Nachfolgend wird die Funktionsweise der erfindungsgemäßen Vorrichtung anhand von zwei Beispielen erläutert.

Bei dem ersten Beispiel ist die Person 12 ein Manager 12, dem ein Handy 8 und ein Computer 10, sowie ein Funktag 22, das er bei sich trägt, zugeordnet sind.

In einem ersten Fall befindet sich der Manager in einem Besprechungsraum, um ein Kundengespräch zu führen. Die Informationsempfangseinrichtung 6 empfängt eine an den Manager 12 adressierte E-mail, und sendet diese in einem geeigneten Format an die Signalverarbeitungseinrichtung 4. Die Signalverarbeitungseinrichtung 4 erhält ständig aktualisierte Information über den Aufenthaltsort des Managers von der Positionserfassungseinrichtung 2, in diesem Fall, daß sich der Manager 12 in dem Besprechungsraum befindet. Aufgrund dieser Information sendet die Signalverarbeitungseinrichtung 4 die empfangene E-mail weder zu dem Computer 10, da der Manager 12 augenblicklich nicht an dem Computer 10 arbeitet, noch als eine SMS-Nachricht zu dem Handy 8, da der Manager 12 in dem Besprechungsraum während des Kundengesprächs nicht gestört werden darf. Stattdessen verzögert die Signalverarbeitungseinrichtung 4 das Übertragen der E-Mail an den Manager 12 solange, bis der Manager 12 den Besprechungsraum verlassen hat. Es wird darauf hingewiesen, daß auch andere Entscheidungsmöglichkeiten möglich sind. Es kann beispielsweise vorgesehen sein, daß die E-mail-Nachricht als eine SMS-Nachricht gesendet wird, wobei das Ankommen der Nachricht beim Handy des Managers lediglich durch ein Vibrieren des Handys signalisiert wird, so daß die Unterredung nicht gestört wird. Darüber hinaus kann es vorgesehen sein, daß diese Entscheidungsmöglichkeiten durch den Manager 12, bzw. den Benutzer der erfindungsgemäßen Vorrichtung einstellbar sind.

In einem anderen Fall befindet sich der Manager 12 außerhalb des Büros und wird deshalb von keiner Sende/Empfangs-Einrichtung 20 erfaßt, die lediglich innerhalb des Büros angebracht sind. Die Signalverarbeitungseinrichtung 4 wählt in diesem Fall aus den von der Personeninformationseinrichtung 26 erhaltenen möglichen Endgeräten, die dem Manager 12 zugeordnet sind, d.h. dem Handy und dem Computer 10, das Handy 8 aus, um die E-mail zu dem Manager 12 möglichst unmittelbar zu übertragen. Die Umwandlungseinrichtung 21 der Signalverarbeitungseinrichtung 4 kann die E-mail beispielsweise in eine SMS-Nachricht oder eine Sprachausgabe umwandeln, die dann an das Handy 8 übertragen wird.

In einem letzten Fall sitzt der Manager vor seinem Computer. Die Signalverarbeitungseinrichtung 4 wählt deshalb zwischen dem Handy 8 und dem Computer 10 den Computer 10 als das geeignete Endgerät aus, da es für den Manager 12 bequemer ist, die E-mail auf seinem Bildschirm zu lesen, als nach seinem Handy 8 zu greifen.

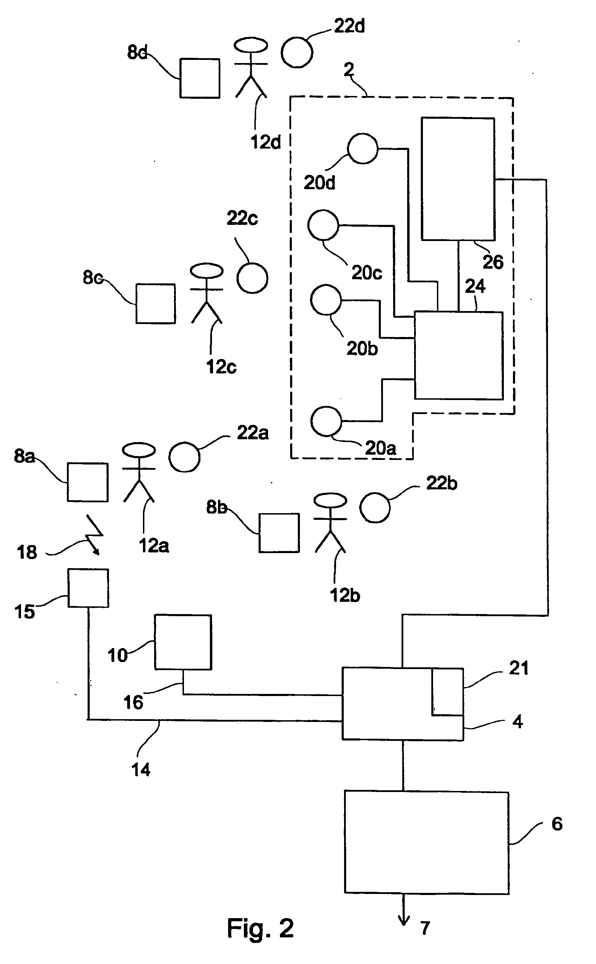

Ein zweites Beispiel betrifft den Einsatz der erfindungsgemäßen Vorrichtung in einem Krankenhaus, das nachfolgend anhand von Fig. 2 beschrieben wird, wobei in Fig. 1 und Fig. 2 gezeigte gleichwirkende Elemente mit gleichen Bezugszeichen versehen sind und nicht erneut beschrieben werden.

In Fig. 2 sind vier Personen 12a-d gezeigt, wobei die Personen 12a, 12b beispielsweise Ärzte sind, und die Personen 12c, 12d Krankenpfleger sind. Sowohl die Ärzte 12a, 12b als auch die Krankenpfleger 12c, 12d sind mit audiofähigen PDAs 22a-d und Funktags 8a-d ausgestattet. Wiederum wird angenommen, daß sich in jedem Raum eine Sende/Empfangs-Einrichtung 20a, 20b, 20c, 20d befindet, damit die Positionserfassungseinrichtung 2 den Aufenthaltsort der vier Personen 12a-d raumgenau bestimmen kann. Es wird ferner angenommen, daß sich die Ärzte 12a, 12b und die Pfleger 12d, 12d bei einer Nachtschicht auf einer Krankenstation befinden.

In einem ersten Fall meldet ein Dosierungsgerät einen Alarm, wobei beispielsweise vorgesehen ist, daß das Dosierungsgerät ein codiertes eindeutiges Signal an die Informationsempfangseinrichtung 6 sendet. Die Informationsempfangseinrichtung 6 gibt das Alarmsignal an die Signalverarbeitungseinrichtung 4 beispielsweise in Form einer Beschreibung über den Vorfall, z. B. mit einigen Meßdaten des Dosierungsgeräts und den Patientendaten, weiter. Die Signalverarbeitungseinrichtung 4 überträgt die Alarmnachricht an den zuständigen Pfleger, beispielsweise 12c. Es kann ferner vorgesehen sein, daß die Signalverarbeitungseinrichtung 4 die Alarmnachricht an den Pfleger, beispielsweise 12d überträgt, der näher an dem Dosierungsgerät ist. Die Bestimmung des Pflegers, an den die Nachricht übertragen werden soll, bestimmt die Signalverarbeitungseinrichtung 4 aus den augenblicklichen Aufenthaltsorten der Pfleger 12c, 12d, die ihr durch die Positionserfassungseinrichtung zur Verfügung gestellt werden. Es kann ferner vorgesehen sein, daß die Signalverarbeitungseinrichtung 4 das Alarmsignal ebenfalls an den Arzt 12a überträgt.

In einem zweiten Fall treten bei einem Patienten Herzrythmusstörungen auf. Der zuständige Arzt 12a befindet sich gerade bei einer Operation in einem Operationssaal, wohingegen der andere Arzt 12b in der Küche ist. Die Signalverarbeitungseinrichtung 4 sendet deshalb die Alarmnachricht an den Arzt 12b, der in der Küche sitzt, da aufgrund der Aufenthaltssituation angenommen werden kann, daß sich der erste Arzt 12a gerade in einer Operation befindet, während der zweite Arzt 12b Pause macht und somit verfügbar ist.

Es wird darauf hingewiesen, daß die Informationen, die von der Informations/Empfangseinrichtung 6 empfangen werden nicht nur auf mündliche bzw. schriftliche Nachrichten beschränkt sind, sondern daß die vorliegende Erfindung auf jegliche Informationen anwendbar ist, bei denen die Informationen schneller und effektiver an eine Person übertragen werden können, falls die Übertragung vom Aufenthaltsort der Person abhängt. Die Informationen können demnach ferner Bilder oder Symbole aufweisen.

## Patentansprüche

1. Verfahren zur Übertragung von Informationen an zumindest eine Person (12), der zumindest ein Ausgabegerät (8, 10) zur Ausgabe der übertragenen Informationen zugeordnet ist, mit folgenden Schritten:
I) Bestimmen des Aufenthaltsorts der Person (12) durch eine Positionserfassungseinrichtung (2);
II) wenn der bestimmte Aufenthaltsort der Person einem ersten Aufenthaltsort entspricht, Übertragen der Informationen, und, wenn der bestimmte Aufenthaltsort der Person einem zweiten Aufenthaltsort entspricht, nicht Übertragen der Informationen.

2. Verfahren gemäß Anspruch 1, bei dem bei dem Schritt II) ein Zwischenspeichern der Informationen stattfindet, wenn der bestimmte Aufenthaltsort der Person dem zweiten Aufenthaltsort entspricht.

3. Verfahren gemäß Anspruch 2, bei dem bei dem Schritt II) ein Übertragen der zwischengespeicherten Informationen zu einem späteren Zeitpunkt stattfindet, wenn für die Person ein Aufenthaltsort bestimmt wird, an dem die Informationen empfangen werden sollen.

4. Verfahren gemäß einem der Ansprüche 1 bis 3, bei dem bei dem Schritt II) ein Umwandeln eines physikalischen Aufenthaltsortes der Person in einen logischen Aufenthaltsort stattfindet, der dem Aufenthaltsort der Person auf der Basis einer logischen Raumaufteilung entspricht, wobei jedem Raum der logischen Raumaufteilung eine aufenthaltsortbezogene Situation zugeordnet ist, die angibt, ob die Informationen an den im Schritt I) bestimmten Aufenthaltsort übertragen werden soll oder nicht, und wobei das Übertragen in Schritt II) abhängig von der aufenthaltsortbezogenen Situation durchgeführt wird, die dem logischen Aufenthaltsort zugeordnet ist.

5. Vorrichtung zum Übertragen von Informationen an zumindest eine Person (12), der zumindest ein Ausgabegerät (8, 10) zur Ausgabe der übertragenen Informationen zugeordnet ist, mit folgenden Merkmalen:
einer Positionserfassungseinrichtung (2) zur Bestimmung des Aufenthaltsort der Person (12); und
einer Signalverarbeitungseinrichtung zur Übertragung der Informationen an die Person (12), wenn der bestimmte Aufenthaltsort der Person einem ersten Aufenthaltsort entspricht, und zum Nicht-Übertragen der Informationen, wenn der bestimmte Aufenthaltsort der Person einem zweiten Aufenthaltsort entspricht.

6. Vorrichtung gemäß Anspruch 5, bei der die Positionserfassungseinrichtung ferner eine
Identifizierungseinrichtung aufweist, die eine Kennung (22) der Person (12) erfasst, um die Identität und den Aufenthaltsort der Person (12) zuzuordnen.

7. Vorrichtung gemäß Anspruch 5 oder 6, die ferner folgendes Merkmal aufweist:
eine Zuordnungseinrichtung (26), die dem Aufenthaltsort der Person (12) einen Aufenthaltsraum zuordnet und aus der Identität der Person die Ausgabegeräte (8, 10) bestimmt, die derselben zugeordnet sind.

8. Vorrichtung gemäß einem der Ansprüche 5 bis 7, bei der die Positionserfassungseinrichtung (2) eine Mehrzahl von Sende/Empfangs-Einrichtungen (20) und einen Transponder (22) umfasst, den die Person (12) mit sich führt, wobei der Transponder (22) die Kennung speichert.

9. Vorrichtung gemäß einem der Ansprüche 5 bis 8, bei der die Mehrzahl von Ausgabegeräten (8, 10) ein Handy, ein Notepad, ein Computer, ein Lautsprecher oder ein PDA aufweist.

## Claims

1. Method of transmitting information to at least one person (12) with which at least one output device (8, 10) for outputting the transmitted information associated, comprising:
I) determining the location of the person (12) by a position detection means (2);
II) if the determined location of the person corresponds to a first location, transmitting the information, and if the determined location of the person corresponds to a second location, not transmitting the information.

2. Method according to claim 1, wherein temporarily storing the information takes place in step II) if the determined location of the person corresponds to the second location.

3. Method according to claim 2, wherein transmitting the temporarily stored information takes place at a later point in time in step II) if a location at which the information is to be received is determined for the person.

4. Method according to one of claims 1 to 3, wherein converting a physical location of the person into a logical location corresponding to the location of the person on the basis of a logical space division takes place in step II), wherein each space of the logical space division has associated therewith a location-related situation indicating whether the information is to be transmitted to the location determined in step II) or not, and wherein transmitting in step II) is performed depending on the location-related situation associated with the logical location.

5. Apparatus for transmitting information to at least one person (12) with which at least one output device (8, 10) for outputting the transmitted information as associated, comprising:
a position detection means (2) for determining the location of the person (12); and
signal processing means for transmitting the information to the person (12) if the determined location of the person corresponds to a first location, and for not transmitting the information if the determined location of the person corresponds to a second location.

6. Apparatus according to claim 5, wherein the position detection means further comprises
identification means detecting an identification (22) of the person (12) to associate the identity and the location with the person (12).

7. Apparatus according to claim 5 or 6, further comprising:
association means (26) associating a location with the location of the person (12) and determining, from the identity of the person, the output devices (8, 12) associated therewith.

8. Apparatus according to one of claims 5 to 7, wherein the position detection means (2) includes a plurality of transceiver means (20) and a transponder (22) carried by the person (12), wherein the transponder (22) stores the identification.

9. Apparatus according to one of claims 5 to 8, wherein the plurality of output devices (8, 10) comprise a mobile phone, a notepad, a computer, a loudspeaker, or a PDA.

## Revendications

1. Procédé pour transmettre des informations à au moins une personne (12) à laquelle est associé au moins un appareil de sortie (8, 10) destiné à sortir les informations transmises, aux étapes suivantes consistant à:
I) déterminer le lieu de séjour de la personne (12) par un moyen de détection de position (2);
II) lorsque le lieu de séjour de la personne correspond à un premier lieu de séjour, transmettre les informations et, lorsque le lieu de séjour déterminé de la personne correspond à un deuxième lieu de séjour, ne pas transmettre les informations.

2. Procédé selon la revendication 1, dans lequel a lieu, à l'étape II), une mémorisation provisoire des informations lorsque le lieu de séjour déterminé de la personne correspond au deuxième lieu de séjour.

3. Procédé selon la revendication 2, dans lequel a lieu, à l'étape II), une transmission des informations mémorisées provisoirement à un moment ultérieur lorsqu'il est déterminé pour la personne un lieu de séjour auquel doivent être reçues les informations.

4. Procédé selon l'une des revendications 1 à 3, dans lequel a lieu, à l'étape II), une conversion d'un lieu de séjour physique de la personne en un lieu de séjour logique correspondant au lieu de séjour de la personne sur base d'une division d'espace logique, à chaque espace de la division d'espace logique étant associée une situation relative au lieu de séjour qui indique si les informations doivent être transmises ou non au lieu de séjour déterminé à l'étape I), et la transmission à l'étape II) étant effectuée en fonction de la situation relative au lieu de séjour associée au lieu de séjour logique.

5. Dispositif pour transmettre des informations à au moins une personne (12) à laquelle est associé au moins un appareil de sortie (8, 10) destiné à sortir les informations transmises, aux caractéristiques suivantes:
un moyen de détection de position (2) destiné à déterminer le lieu de séjour de la personne (12); et
un moyen de traitement de signal destiné à transmettre les informations à la personne (12) lorsque le lieu de séjour déterminé de la personne correspond à un premier lieu de séjour et à ne pas transmettre les informations lorsque le lieu de séjour déterminé de la personne correspond à un deuxième lieu de séjour.

6. Dispositif selon la revendication 5, dans lequel le moyen de détection de position présente par ailleurs un moyen d'identification qui détecte une identification (22) de la personne (12), pour associer l'identité et le lieu de séjour de la personne (12).

7. Dispositif selon la revendication 5 ou 6, présentant par ailleurs la caractéristique suivante:
un moyen d'association (26) qui associé au lieu de séjour de la personne (12) un espace de séjour et détermine, à partir de l'identité de la personne, les appareils de sortie (8,10) qui sont associés à cette dernière.

8. Dispositif selon l'une des revendications 5 à 7, dans lequel le moyen de détection de position (2) comprend une pluralité de moyens d'émission/réception (20) et un transpondeur (22) que la personne (12) emporte avec elle, le transpondeur (22) mémorisant l'identification.

9. Dispositif selon l'une des revendications 5 à 8, dans lequel la pluralité d'appareils de sortie (8,10) présentent un téléphone mobile, un bloc-note électronique, un ordinateur, un haut-parleur ou un PDA.
